# EUROPÄISCHE PATENTANMELDUNG

(11) **EP 2 193 832 A1**
(43) Veröffentlichungstag der Anmeldung: **09.06.2010**
(21) Anmeldenummer: 09013785.2
(22) Anmeldetag: 03.11.2009
(51) Int. Cl.: B01D 35/30, B01D 24/10, B01D 24/48

(54) **Filterungsvorrichtung mit einem durch Sicht kontollierbaren Filter**

(30) Priorität: 27.11.2008 DE 202008015742 U
(71) Anmelder: Steigerwald, Udo, 63825 Blankenbach (DE)
(72) Erfinder: Steigerwald, Udo, 63825 Blankenbach (DE)
(74) Vertreter: Pöhner, Wilfried Anton, Dr.

(57) **Zusammenfassung**

Filterungsvorrichtung mit einem durch Sicht kontrollierbaren Filter für Flüssigkeiten, bestehend aus dem Filterkessel, mit wenigstens einer Einlauföffnung und mit wenigstens einem Austritt für eine Flüssigkeit und teilweise befüllt mit Filtermaterial und mit einem Sichtfenster, durch das wenigstens ein Teil der nach oben weisenden Filterfläche des Filtermaterials sichtbar ist, wobei innerhalb des Filterkessels mehrere Lichtquellen angeordnet sind, deren Lichtstrahlen gleichmäßig über den Umfang der Filterfläche verteilt sind.

## Beschreibung

Die Erfindung bezieht sich auf eine Filterungsvorrichtung mit einem durch Sicht kontrollierbaren Filter für Flüssigkeiten, bestehend aus dem Filterkessel, mit wenigstens einer Einlauföffnung und mit wenigstens einem Austritt für eine Flüssigkeit und teilweise befüllt mit Filtermaterial und mit einem Sichtfenster, durch das wenigstens ein Teil der nach oben weisenden Filterfläche des Filtermaterials sichtbar ist.

Für das Filtern von verunreinigten Flüssigkeiten, wie z. B. benutztem Wasser in Schwimmbädern und anderen Badeeinrichtungen gehört es zum Stand der Technik, die Flüssigkeit durch ein Filtermaterial, z.B. eine Schichtung aus Kies und Sand laufen zu lassen, das Verschmutzungen mechanisch aussondert, indem die Flüssigkeit hindurch gepumpt wird. Abhängig von der Verschmutzung und von dem insgesamt hindurch gepumpten Volumen ist das Filtermaterial zu einem bestimmten Zeitpunkt zu gesetzt und /oder kontaminiert, so dass es gereinigt oder gewechselt werden muss.

Um diesen Zeitpunkt korrekt zu bestimmen, ist es z. B. für viele Schwimmbäder vorgeschrieben, dass der Filterkessel mit einem Sichtfenster ausgestattet ist, durch das die nach oben weisende Filterfläche des Filtermaterials sichtbar ist und dass diese Filterfläche in regelmäßigen Abständen visuell kontrolliert wird.

So beschreibt auf aktuellem Stand der Technik das Gebrauchsmuster DE 29602 146, Dinotec GmbH ein Sichtfenster für einen Filterkessel, das zur Verbesserung der Sichtbarkeit der Filterfläche über die gesamte Höhe des Filterkessels verläuft.

Damit wird jedoch vor allem nur erreicht, dass der Füllstand des Filtermaterials im Kessel beliebig gewählt werden kann und die Filterfläche trotzdem noch sichtbar bleibt.

Es verbleibt jedoch als wesentlicher Nachteil, dass die Filterfläche nur durch eine begrenzte Sichtfläche hindurch erkennbar ist. Insbesondere bei ungenügender Beleuchtung wird die kontrollierende Person reflexartig noch näher an das Sichtfenster heran treten, um die zu inspizierende Fläche genauer zu erkennen, wodurch die Summe des einfallenden Lichtes noch weiter verringert wird. Aus dem Wunsch nach guter Erkennbarkeit und dem dadurch bewirkten Abdecken des Lichteinfalls durch das Sichtfenster hindurch baut sich ein "Teufelskreis" der Verdunkelung auf, der im Extremfall nur durch die Nase und/oder die Brille der inspizierenden Person begrenzt wird.

Ein weiterer, prinzipieller Nachteil nur eines einzigen Sichtfensters ist, dass die Filterfläche grundsätzlich und unter allen Umständen ungleichmäßig beleuchtet wird, d. h. sie ist in der Nähe des Fensters sehr viel besser ausgeleuchtet als in den übrigen Bereichen, sodass die Beleuchtung über die Filterfläche hinweg stets sehr ungleichmäßig ist.

Dadurch wird jedoch die wichtigste Funktion des Fensters, nämlich die Beurteilung des Verschmutzungsgrades der Filterfläche extrem erschwert, da das Erreichen der Verschmutzungsgrenze nicht etwa durch einen schlagartigen und sehr deutlichen Wechsel des Farbe markiert ist, sondern dadurch, dass sich die Farbgebung der Filterfläche parallel zur kontinuierlich zunehmenden Verschmutzung ebenfalls kontinuierlich, also stufenlos, ändert.

Daher ist die urteilende Person auf absolute Maßstäbe angewiesen, für die nur ihr eigenes Farbgedächtnis als Vergleichsgröße nutzbar ist.

Größere Fremdkörper, die sich auf der Filterfläche ablagern, können ebenfalls nicht alle einwandfrei identifiziert werden, da im Schlagschatten eines größeren Körpers ein kleinerer Fremdkörper unerkannt bleiben kann.

Die Beurteilung des Verschmutzungsgrades wird also durch die ungleichmäßige Verteilung des durch das Sichtfenster einfallenden Lichtes weiter erschwert.

Theoretisch ist es denkbar, in der Praxis jedoch sehr aufwändig, zusätzliche Fenster in das Gefäß einzubauen. Wenn dieser Aufwand erbracht worden ist, so muss zusätzlich noch dafür gesorgt werden, dass auch durch alle Fenster Licht mit der gleichen Lichtstärke einfällt.

Auf diesem Hintergrund hat sich die Erfindung die Aufgabe gestellt, eine Filterungsvorrichtung entwickeln, in dem die Filterfläche über den gesamten Umfang des Filterkessels hinweg von außen ohne optische Verfälschungen erkennbar und überprüfbar ist.

Als Lösung stellt die Erfindung vor, dass innerhalb des Filterkessels mehrere Lichtquellen angeordnet sind, deren Lichtstrahlen gleichmäßig über den Umfang der Filterfläche verteilt sind.

An Stelle von zusätzlichen Fenstern im Filterkessel und anstelle von gleichartigen Lichtquellen außerhalb des Kessels, ist es das Merkmal der Erfindung, dass mehrere Lichtquellen innerhalb des Filterkessels vorhanden sind. Damit kann erreicht werden, dass das Licht über dem gesamten Umfang des Filterkessels hinweg gleichmäßig verteilt ist.

Das besondere Merkmal der Erfindung ist also nicht die Idee, überhaupt eine Beleuchtung zu schaffen, sondern die Lichtstärke der Beleuchtung gleichmäßig zu verteilen, weil nur dadurch die eigentliche Hauptfunktion des Sichtfensters, nämlich das rechtzeitige und sichere Erkennen von unzulässigen Verschmutzungen, erst möglich wird.

Nach bisherigem Stand der Technik bedurfte es dazu stets der besonderen Erfahrung eines routinierten Überwachers, der die jeweilige, mittlere Verschmutzung trotz der Helligkeits- und Farbverfälschungen durch eine unzureichende Beleuchtung korrekt identifizieren konnte.

Mit einer erfindungsgemäß gleichmäßigen Ausleuchtung ist jedoch auch dem wenig routinierten oder sogar fast unerfahrenen Kontrolleur eine einigermaßen sichere Beurteilung möglich. Oder - anders ausgedrückt - ermöglicht es eine erfindungsgemäße Filterungsvorrichtung auch, weniger erfahrenes Personal zu beschäftigen, ohne ein grundsätzlich höheres Fehlerrisiko einzugehen.

Vom Prinzip her sind als Lichtquelle alle nach aktuellem Stand der Technik bekannte sowie alle denkbaren Lichterzeugungseinrichtungen verwendbar. Von einfachen Glühbirnen über Halogenstrahler und Metalldampflampen sind bis zu Leuchtstoffröhren und LED's alle Varianten denkbar.

Dabei können entweder einzelne, konkrete Lichtquellen auf die Innenseite des Filterkessels montiert werden und dabei in den Filterkessel hineinragen, oder sie werden in Mulden oder in einer umlaufenden Nut befestigt, sodass die Oberfläche des Lichtaustrittes eine Fortsetzung der Innenfläche des Filterkessels ist.

Möglich ist auch die Anbringung der Lichtquellen an der Innenseite eines Deckels, der z.B. eine Wartungsöffnung verschließt.

Ebenfalls denkbar, wenn auch sehr aufwändig, ist die Anordnung von mehreren, kleinen transparenten Flächen in der Wandung des Filterkessels, durch welche je eine Lichtquelle von außen in den Filterkessel hinein leuchtet.

Eine weitere Alternative sind Glasfasern und/oder Spiegel, die Licht von einer weiter entfernten Lichtquelle herbeiführen. Dadurch können im Extremfall alle Lichtquellen innerhalb des Filterkessels ihre Lichtstrahlen aus einer einzigen, gemeinsamen Leuchte beziehen. Diese Leuchte kann nicht nur elektrisch oder durch Abbrennen eines Gases oder eines Feststoffes betrieben werden, sondern könnte auch die Sonne oder zumindest Tageslicht, also diffus reflektiertes Sonnenlicht sein.

Da es das wichtigste Ziel der erfindungsgemäßen Beleuchtung ist, dass die Lichtstrahlen gleichmäßig verteilt sind, sollten möglichst zahlreiche Lichtquellen eingesetzt werden, denn je größer deren Anzahl ist, desto gleichmäßiger ist die Verteilung über die Filterfläche hinweg.

Im Extremfall sind wenigstens zwei Lichtquellen das Minimum für einen erfindungsgemäßen Filterkessel. Diese beiden Lichtquellen sollten dann im Bezug auf die Filterfläche möglichst an gegenüberliegenden Seiten angeordnet werden, damit durch eventuelle Unebenheiten auf der Filterfläche erzeugte Schlagschatten von der zweiten Lichtquelle wieder ausgeleuchtet werden.

Da im Sinne der Erfindung jedoch eine möglichst große Anzahl von Lichtquellen die eindeutig bessere Lösung ist, bevorzugt die Erfindung, dass mehrere Lichtquellen zu einem Lichtband zusammengefasst sind. Wenn dieses Lichtband an der Innenwand des Filterkessels angeordnet ist, dann ist die mechanische Befestigung dort relativ einfach und dann wird die eintreffende Flüssigkeit durch das Lichtband auch so wenig wie möglich behindert.

Wichtig ist, dass das Lichtband an allen Stellen etwa die gleiche Lichtstärke abstrahlt und etwa den gleichen Abstand zur Filterfläche aufweist.

Eine statisch besonders widerstandsfähige, im Verhältnis von der Außenfläche des Filterkessels zum Rauminhalt besonders günstige und daher wirtschaftlich besonders vorteilhafte Konfiguration eines Filterkessels ist eine zylindrische Bauform. Die Längsachse des Zylinders wird vorzugsweise senkrecht ausgerichtet, sodass die Einlauföffnung an der oberen Stirnseite und der Austritt an der unteren Stirnseite angeordnet sind.

Dann befindet sich das Sichtfenster in der Mantelfläche des Zylinders und die Filterfläche, also die Oberfläche des im Filterkessel gelagerten Filtermaterials, ist ein Kreis. In diesem Fall ist das Lichtband vorzugsweise etwa ringförmig.

Eine mechanisch einfach zu realisierende, optisch sinnvolle und hydrodynamisch kaum interferierende Befestigungsmethode ist es, das Lichtband an der Innenwand des Filterkessels anzuordnen.

Wenn der Filterkessel aus Metall ist, bietet es sich an, eine umlaufende Nut vorzusehen, in welche das Lichtband eingesenkt werden kann, sodass seine Oberfläche etwa die Fortsetzung der übrigen Innenfläche des Filterkessels ist. Wenn der Filterkessel aus Kunststoff, wie z. B. glasfaserverstärktem Kunststoff (GFK) gefertigt ist, ist es sinnvoll, das Lichtband an der Innenwand des Filterkessels einzulaminieren.

Alternativ kann an die Innenseite des Kessels auch ein von außen zugängliches, transparentes Rohr einlaminiert werden, in den das Lichtband eingeschoben wird. Dieses Rohr schützt das Lichtband und ermöglicht einen schnellen und einfachen Wechsel, falls es ausfallen sollte. Für zusätzliche Sicherheit kann das Rohr mit einem wasserdichten Verschluss versehen werden, durch den die elektrische Energieversorgung des Lichtbandes geführt wird.

Ein geeignetes Lichtband kann prinzipiell mit den verschiedensten Arten von Lichtquellen bestückt werden. Besonders geeignet sind jedoch Halbleiter, die auf einer flexiblen Platine aufgebracht sind, sodass das Lichtband an verschiedene Radien angepasst werden kann.

Sehr interessant sind dafür "Light Emitting Diodes", die LED's. Zu ihren Vorzügen zählen eine sehr kompakte Bauform, die Abstrahlung des Lichtes vorrangig in eine Richtung und der auf aktuellem Stand der Technik vergleichsweise hohe Wirkungsgrad von bis zu 20 %.

Eine erfindungsgemäße Filterungsvorrichtung ermöglicht jedoch auch die Anbringung der Lichtquellen in der Nähe der Einlauföffnung oder in den Zwischenräumen von mehreren Einlauföffnungen. Wenn z. B. in einem Filterkessel hinter der Einlauföffnung ein Verteiler angeordnet ist, der die eintreffende, noch verunreinigte Flüssigkeit auf mehrere kleine Öffnungen verteilt - ähnlich dem Prinzip eines Duschkopfes - dann ist es sinnvoll, die Lichtquellen zwischen diesen zahlreichen kleinen Öffnungen anzuordnen. Dadurch steht die mit den Lichtquellen bestückte Fläche in gleichem Abstand und etwa parallel zur Filterfläche, so dass nicht nur eine gleichmäßige Verteilung der Lichtstärke über den Umfang hinweg sondern auch über die Radien der Filterfläche hinweg erreicht wird.

Wenn Lichtquellen eingesetzt werden, die- anders als z. B. eine Leuchtstoffröhre - im Prinzip nicht linienförmig, sondern punktförmig sind und wenn jede dieser Lichtquellen einen Lichtkegel auf die Filterfläche abstrahlt, dann sollten alle Lichtquellen so ausgerichtet sein, dass ihre Lichtkegel aneinandergrenzen oder sich nur geringfügig überschneiden. Wenn es im Idealfall erreicht wird, dass die einzelnen Lichtflächen so exakt wie Wandkacheln aneinander stoßen, ist eine perfekte Gleichmäßigkeit der Ausleuchtung der Filterfläche erreicht. In der Praxis bewirkt jedoch auch eine geringfügige Überlappung der einzelnen Lichtkegel keine dramatischen Unterschiede in der Verteilung der Lichtstärke.

Da die Beleuchtung der Filterfläche nur dann benötigt wird, wenn sie auch tatsächlich inspiziert wird, ist es sinnvoll, sie auch nur während dieser Inspektion einzuschalten. Dafür ist es z. B. denkbar, dass eine Klappe oder eine Jalousie über dem Sichtfenster beim Hochklappen oder Wegschieben einen Schalter oder einen Initiator betätigt, der die Lichtquellen aktiviert. Alternativ oder zusätzlich könnte auch ein Bewegungsmelder angebracht und justiert werden, der die Präsenz einer Person vor dem Sichtfenster detektiert. Eine technisch einfache Alternative ist ein Ein-Aus-Schalter.

Es ist von Vorteil, wenn die Lichtquellen mit Spannungen von 24 V oder niedriger sowie über einen Trenntransformator versorgt werden. Dann kann die Filteranlage auch bei vollständiger Zerstörung der Lichtquellen nicht unter eine Spannung gesetzt werden, die für Personen gefährlich werden könnte.

Leicht nutzbar ist auch ein Schlüssel, mit dem eine autorisierte Kontrollperson die Lichtquellen über einen Schlüsselschalter aktiviert. Geeignet sind auch Chipkarten oder ein RFID-Baustein (Radio Frequency Identification) mit einem Transponder, die in der Nähe des Sichtfensters und des Schalters für die Beleuchtung angeordnet sein müssen.

In einer weiteren Variante können die Lichtquellen Blitzleuchten sein oder zumindest Blitzleuchten enthalten, die von einer Kamera aktivierbar sind, mit der durch das Sichtfenster hindurch die Filterfläche abgebildet werden kann. Eine solche Einrichtung ist ein Schritt hin zu einer Automatisierung der Überprüfung des Verschmutzungsstandes vom Filter.

In einer ersten Stufe könnte eine fest installierte Kamera Aufnahmen unter reproduzierbaren Lichtbedingungen erstellen. Diese Aufnahmen dienen im einfachsten Fall zu einem Nachweis über den Zustand des Filters und zur Archivierung des angetroffenen Befundes.

In einem weiteren Schritt des Ausbaus ermöglichen sie eine Bewertung des aktuellen Verschmutzungsgrades an einem anderen Ort als am Filter selbst.

In einer nächsten Ausbaustufe ist die Kamera direkt an einen Rechner angeschlossen, der über ein Bildauswertungsprogramm das aktuelle Bild der vorgefundenen Verschmutzung der Filterfläche mit dem Bild der unverschmutzten Filterfläche vergleichen kann und dadurch eine automatische Bewertung des Verschmutzungsstandes ermöglicht.

Wenn diese Überwachungsautomatik von einem Durchflusszähler in der Flüssigkeit in regelmäßigen Abständen aktiviert wird, wird der Filterstand vollautomatisch überprüft und so eine mannlose Überwachung des Filterkessels möglich.

Im Folgenden sollen weitere Einzelheiten und Merkmale der Erfindung anhand eines Beispiels näher erläutert werden. Dieses soll die Erfindung jedoch nicht einschränken, sondern nur erläutern. Es zeigt in schematischer Darstellung:

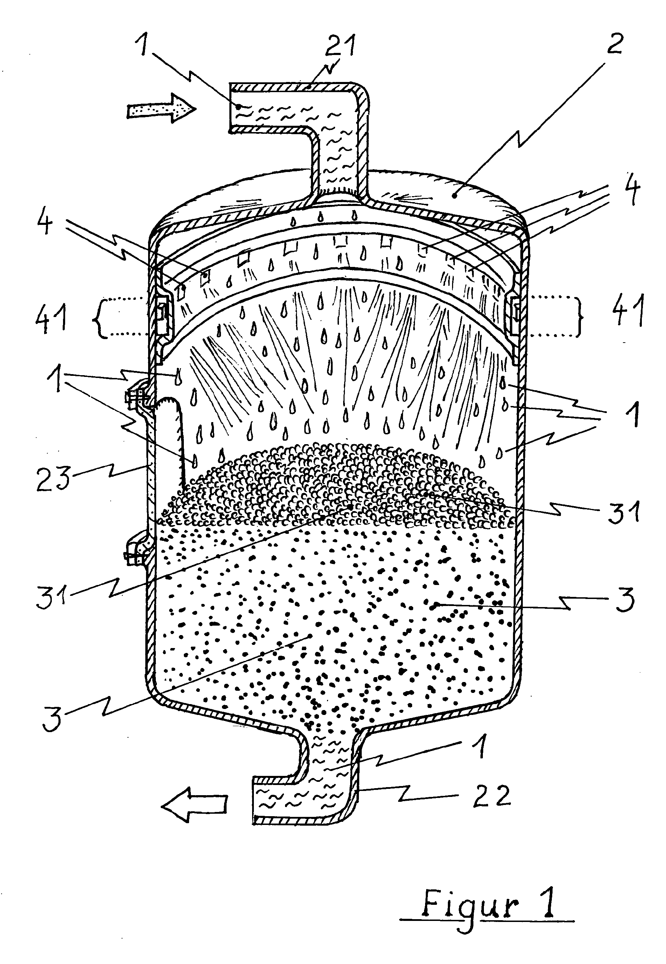

Figur 1 Längsschnitt durch einen Filterkessel mit Lichtband

In Figur 1 ist im Längsschnitt ein zylindrischer Filterkessel 2 dargestellt, an dessen oberer Stirnseite die verschmutzte Flüssigkeit 1 durch die Einlauföffnung 21 einläuft, was in Figur 1 durch einen großen Pfeil mit gepunkteter Fläche symbolisiert ist. An der Unterseite des Filterkessels 2 ist in diesem Ausführungsbeispiel der Austritt 22 angeordnet, aus welchem die Flüssigkeit 1 den Filterkessel 2 gereinigt wieder verlässt, was in Figur 1 ein entsprechender Pfeil anzeigt.

Im unteren Teil des Filterkessels 2 ist das Filtermaterial 3 zu erkennen, hier durch schwarze Punkte dargestellt. Die Oberfläche des Filtermaterials 3 ist die Filterfläche 31, von der in Figur 1 eine Hälfte zu sehen ist.

An der in Figur 1 linken Seite des Filterkessels 2 ist das Sichtfenster 23 angeordnet, das den Blick auf die Filterfläche 31 frei gibt. In Figur 1 wird sehr schnell deutlich, dass Licht, welches durch das Sichtfenster 23 auf die Filterfläche 31 fällt, dort nur sehr ungleichmäßig verteilt ist: Nahe dem Sichtfenster 23 ist die Filterfläche 31 gut ausgeleuchtet, aber in dem hinteren Teil der Filterfläche 31 - in Figur 1 auf der rechten Seite - ist die Ausleuchtung spürbar schlechter.

In Figur 1 ist sehr gut nachvollziehbar, dass relativ sehr große, insbesondere klumpenförmige Verunreinigungen sich auch bei unzureichender Beleuchtung noch deutlich vom Filtermaterial 3 auf der Filterfläche 31 abheben.

In der Praxis treffen jedoch die meisten Verunreinigungen in relativ sehr kleiner Form ein, sodass sie vor allem als Trübung der Flüssigkeit 1 und als Farbveränderung des Filtermaterials 3 wahrgenommen werden. In Figur 1 ist diese eintreffende, verunreinigte Flüssigkeit, die durch die Einlauföffnung 21 in den Filterkesse 2 eintritt, innerhalb des Filterkessels in Form von Tropfen dargestellt. Diese Umwandlung kann z. B. durch einen - hier nicht eingezeichneten - Verteiler erfolgen, der dafür sorgt, dass die eintreffende Flüssigkeit 1 in Form von Tropfen möglichst gleichmäßig auf der Filterfläche 31 verteilt wird.

Im oberen Bereich des Filterkessels 2 ist das eigentliche Merkmal der Erfindung zu erkennen, nämlich das Lichtband 41, das ringförmig um die Innenwand des Filterkessels 2 herumläuft. In diesem Ausführungsbeispiel besteht es aus einem flachen, lichtdurchlässigen Streifen, in den zahlreiche Lichtquellen 4 eingelassen sind, hier durch Rechtecke symbolisiert. Die Lichtstrahlen, die aus jeder Lichtquelle 4 austreten, sind durch einige schwarze Striche angedeutet.

In der Ausführungsvariante von Figur 1 ist das Lichtband 41 durch eine darüber gelegte, ebenfalls durchsichtige Kunststoffschicht mit dem Kessel verbunden. Durch dieses "Einlaminieren" wird das Lichtband 41 nicht nur an der Innenwand des Filterkessels 2 befestigt, sondern auch gegen das Eintreten von Feuchtigkeit geschützt und damit vor den Belastungen durch eventuell in der Flüssigkeit 1 enthaltene Schadstoffe geschützt.

In Figur 1 ist durch die - hier schwarz eingezeichneten - Lichtstrahlen sehr gut nachvollziehbar, dass die Filterfläche 31 gleichmäßig ausgeleuchtet wird, sodass nur durch Helligkeits- und/oder Farbunterschiede erkennbare Verunreinigungen des Filtermaterials 3 schnell bemerkt und beurteilt werden können.

### Bezugszeichenliste

- 1: Flüssigkeiten
- 2: Filterkessel, enthält das Filtermaterial 3
- 21: Einlauföffnung des Filterkessels 2
- 22: Austritt des Filterkessels 2
- 23: Sichtfenster im Filterkessel 2
- 3: Filtermaterial, im Filterkessel 2
- 31: Filterfläche, Oberfläche des Filtermaterials 3
- 4: Lichtquelle, innerhalb des Filterkessels 2
- 41: Lichtband, enthält mehrere Lichtquellen 4

## Patentansprüche

1. Filterungsvorrichtung mit einem durch Sicht kontrollierbaren Filter für Flüssigkeiten 1, bestehend aus dem Filterkessel 2,
- mit wenigstens einer Einlauföffnung 21 und
- mit wenigstens einem Austritt 22 für eine Flüssigkeit 1 und
- teilweise befüllt mit Filtermaterial 3 und
- mit einem Sichtfenster 23, durch das wenigstens ein Teil der nach oben weisenden Filterfläche 31 des Filtermaterials 3 sichtbar ist
**dadurch gekennzeichnet, dass**
innerhalb des Filterkessels 2 mehrere Lichtquellen 4 angeordnet sind, deren Lichtstrahlen gleichmäßig über den Umfang der Filterfläche 31 verteilt sind.

2. Filterungsvorrichtung nach dem vorhergehenden Anspruch 1, **dadurch gekennzeichnet, dass** die Lichtquellen 4
- an der Innenwand des Filterkessels 2 oder
- der Innenseite eines Deckels über einer Öffnung im Filterkessel 2 angeordnet sind.

3. Filterungsvorrichtung nach einem der vorhergehenden Ansprüche, **dadurch gekennzeichnet, dass** mehrere Lichtquellen 4 zu einem Lichtband 41 zusammengefasst sind.

4. Filterungsvorrichtung nach dem vorhergehenden Anspruch 3, **dadurch gekennzeichnet, dass** das Lichtband 41 an allen Stellen etwa die gleiche Lichtstärke abstrahlt und etwa den gleichen Abstand zur Filterfläche 31 aufweist.

5. Filterungsvorrichtung nach dem vorhergehenden Anspruch 4, **dadurch gekennzeichnet, dass** das Lichtband 41 etwa ringförmig ist.

6. Filterungsvorrichtung nach einem der vorhergehenden Ansprüche, **dadurch gekennzeichnet, dass** das Lichtband 41 an der Innenwand des Filterkessels 2
- direkt einlaminiert oder
- in ein einlaminiertes, von außen zugängliches, transparentes Rohr eingeschoben ist.

7. Filterungsvorrichtung nach einem der vorhergehenden Ansprüche, **dadurch gekennzeichnet, dass** das Lichtband 41 mehrere LED's enthält.

8. Filterungsvorrichtung nach einem der vorhergehenden Ansprüche, **dadurch gekennzeichnet, dass** die Lichtquellen 4 zwischen mehreren Einlauföffnungen 21 angeordnet sind.

9. Filterungsvorrichtung nach einem der vorhergehenden Ansprüche, **dadurch gekennzeichnet, dass** jede der Lichtquellen 4 einen Lichtkegel auf die Filterfläche 31 abstrahlt und alle Lichtquellen 4 so ausgerichtet sind, dass ihre Lichtkegel aneinandergrenzen oder sich nur geringfügig überschneiden.

10. Filterungsvorrichtung nach einem der vorhergehenden Ansprüche, **dadurch gekennzeichnet, dass** die Lichtquellen 4
- beim Öffnen einer Abdeckklappe über dem Sichtfenster 23 oder
- bei der Aktivierung eines Bewegungsmelders
- durch einen Ein-Aus-Schalter
eingeschaltet werden.

11. Filterungsvorrichtung nach einem der vorhergehenden Ansprüche, **dadurch gekennzeichnet, dass** die Lichtquellen 4 Blitzleuchten sind oder zumindest Blitzleuchten enthalten, die von einer Kamera aktivierbar sind, mit der durch das Sichtfenster 23 hindurch die Filterfläche 31 abgebildet werden kann.

12. Filterungsvorrichtung nach dem vorhergehenden Anspruch 11, **dadurch gekennzeichnet, dass** die Kamera an einen Rechner angeschlossen ist, welcher mittels eines Bildauswertungsprogramms das Bild vom aktuellen Maß der Verschmutzung der Filterfläche 31 mit dem Bild der unverschmutzten Filterfläche 31 vergleichen kann.
